# FASCICULE DE BREVET EUROPEEN

(11) **EP 3 174 778 B1**
(45) Date de publication et mention de la délivrance du brevet: **31.10.2018**
(21) Numéro de dépôt: 15756971.6
(22) Date de dépôt: 29.07.2015
(51) Int. Cl.: B62D 27/06, B62D 35/00

(54) **BECQUET DE VÉHICULE AUTOMOBILE EN DEUX PARTIES**
ZWEITEILIGER KRAFTFAHRZEUGSPOILER
TWO-PART MOTOR VEHICLE SPOILER

(30) Priorité: 01.08.2014 FR 1457520
(43) Date de publication de la demande: 07.06.2017
(73) Titulaire: Compagnie Plastic Omnium, 69007 Lyon (FR)
(72) Inventeur: LETERRIER, Franck, 01150 Lagnieu (FR)
(74) Mandataire: Andrieux, Benoît
(86) Numéro de dépôt international: PCT/FR2015/052100
(87) Numéro de publication internationale: WO 2016/016578

(56) Documents cités:
- EP-A1- 2 631 160
- WO-A1-2013/178902
- GB-A- 2 459 980
- JP-A- 2006 298 229
- JP-U- H0 195 488
- US-A1- 2007 001 482
- US-A1- 2007 236 046

## Description

La présente invention concerne le domaine de l'automobile. Elle concerne plus particulièrement un becquet arrière, de véhicule automobile.

On appelle becquet (ou aileron, en anglais « spoiler ») une pièce de carrosserie destinée à améliorer l'aérodynamique du véhicule sur laquelle cette pièce est placée. Les becquets sont également utilisés pour des aspects esthétiques du véhicule. Le becquet arrière est fixé à l'arrière du véhicule. Il s'agit donc d'une pièce de carrosserie située et fixée entre le pavillon et la lunette. Le becquet peut par exemple être fixé sur la partie supérieure du hayon, à l'arrière du véhicule, juste au-dessus du bord supérieur de la lunette.

Il est avantageux en disposant d'une variété de becquets différents (en forme, en finition, en dimension...), de pouvoir le remplacer sur un véhicule déjà équipé (par exemple chez le garagiste), ceci notamment afin d'améliorer l'aérodynamisme du véhicule ou d'en changer le style (aspect extérieur). Le remplacement d'un becquet est également nécessaire dans le cas où le becquet a été endommagé.

Les becquets actuellement utilisés sont fixés de façon définitive et donc difficilement amovible, sur le véhicule. Il est dès lors difficile et coûteux de changer un becquet.

Il existe également d'autres becquets, comme ceux décrits dans les documents JP2006-298229A et JPH01-095488U, qui sont fixés de façon amovible sur le véhicule. Le changement de ces becquets est toutefois coûteux, car l'ensemble du becquet doit être changé. La présente invention vise à remédier à ces inconvénients.

L'invention vise à proposer un becquet dont la géométrie et l'apparence extérieure soient aisément modifiables, tout en améliorant le processus de fabrication de ce becquet.

Ce but est atteint grâce au fait que le becquet arrière de véhicule automobile comporte :
- Une première partie qui est destinée à être fixée sur l'arrière du véhicule dans une position de fixation à l'aide de premiers moyens de fixation,
- Une deuxième partie qui est destinée à être fixée de façon amovible sur la première partie dans une position de fixation par des deuxièmes moyens de fixation, la deuxième partie laissant visible une portion de la face supérieure de la première partie dans cette position de fixation.

Grâce à ces dispositions, il est aisé de faire varier la géométrie et l'apparence du becquet, et de remplacer le cas échéant la deuxième partie endommagée d'un becquet.

En particulier, la face supérieure du becquet peut présenter deux zones de couleurs ou d'aspect différentes, tout en facilitant et en simplifiant le processus de fabrication du becquet. Ainsi, il n'est par exemple pas nécessaire, pour obtenir ces deux zones, de recourir à une étape de marouflage pendant le procédé de peinture, procédé complexe et délicat. Il est ainsi plus aisé de faire varier la forme ou la finition de ces deux zones indépendamment, avec un préjudice minimisé sur le coût de production du becquet. Les possibilités de choix sont multipliées et donc la qualité perçue par les utilisateurs est également améliorée car le becquet est personnalisable.

Avantageusement, l'une au moins de la première partie et de la deuxième partie est structurelle.

Ainsi, de par la rigidité de la première partie et/ou de la deuxième partie, le becquet dans son ensemble se déforme moins en utilisation.

Avantageusement la deuxième partie est structurelle et elle porte un élément technique.

Avantageusement, la première partie est conformée pour permettre le montage et le démontage d'une lunette lorsque la première partie est en position de fixation.

Ainsi, on permet l'assemblage de la lunette sur le hayon traditionnellement effectué par collage selon une trajectoire incidente quasi perpendiculaire à la piste de collage, quelle que soit la géométrie du becquet. En effet, après avoir assemblé la lunette, on peut fixer une deuxième partie de géométrie choisie parmi les diverses géométries disponibles.

Avantageusement, la deuxième partie recouvre le bord supérieur de la lunette lorsque cette deuxième partie est en position de fixation. Ainsi, le bord supérieur de la lunette avec la zone de collage reste caché (lorsqu'on regarde l'arrière du véhicule), ce qui améliore la qualité perçue par un utilisateur potentiel du véhicule, et protège également cette zone.

Selon un mode de réalisation, la deuxième partie peut comprendre un panneau, et un renfort qui s'étend dans l'espace intérieur de la deuxième partie, et qui renforce ledit panneau.

Ce renfort peut être un bras dont une extrémité est à proximité immédiate de la plage supérieure du panneau de la deuxième partie.

Selon ce mode de réalisation, le renfort et le panneau constituent une pièce d'un seul tenant, le renfort étant articulé avec le panneau par une portion rétrécie du panneau, et étant repliable dans ledit espace intérieur dans une position repliée où il renforce ledit panneau. La portion rétrécie peut être un film charnière venu de moulage.

Selon l'invention, la fixation de la deuxième partie sur la première partie peut s'effectuer par encliquetage.

Selon l'invention, la première partie peut être fixée sur la doublure d'un hayon du véhicule, ou sur le pavillon du véhicule.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en coupe d'un exemple de becquet selon l'invention,
- la figure 2 est une vue en coupe d'un exemple de variante d'un becquet selon l'invention,
- la figure 3 est une vue en perspective d'un exemple de becquet selon l'invention, illustrant l'articulation entre le renfort et le panneau de la deuxième partie du becquet,
- la figure 4 est une vue en perspective d'un exemple de becquet selon l'invention, illustrant une variante de l'articulation entre le renfort et le panneau de la deuxième partie du becquet,
- la figure 5 est une vue en coupe d'un autre mode de réalisation d'un becquet selon l'invention, illustrant un mode de fixation de la deuxième partie sur la première partie,
- la figure 6 est une vue en coupe d'un autre mode de réalisation d'un becquet selon l'invention, illustrant un mode de fixation de la deuxième partie sur la première partie.

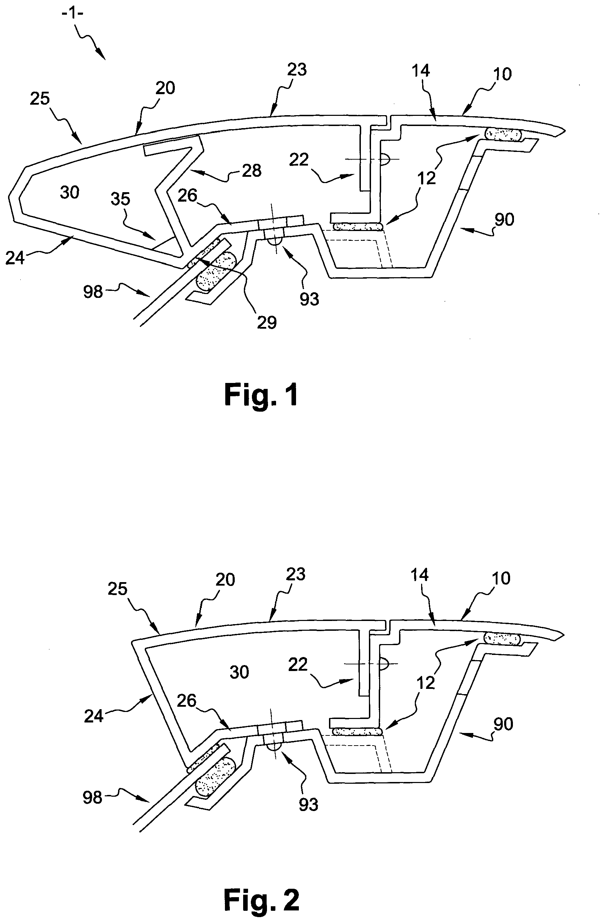

La figure 1 illustre un exemple particulier de réalisation d'un becquet 1 arrière selon l'invention.

Le becquet 1 illustré sur la figure 1 est monté sur une doublure de hayon 90 d'un véhicule automobile. La coupe de la figure 1 est dans le plan longitudinal du véhicule (de l'avant vers l'arrière), la direction perpendiculaire au plan de coupe est donc la direction gauche-droite du véhicule (direction transversale).

Ce becquet 1 comprend une première partie 10, qui est fixée de préférence sur la doublure de hayon 90, dans une position de fixation à l'aide de premiers moyens de fixation 12. Ces moyens de fixation 12 sont par exemple de la colle, comme représenté sur la figure 1.

Par « position de fixation », on entend l'état dans lequel la première partie 10 est assemblée avec l'élément qui porte cette première partie 10, que cet élément soit par exemple le hayon ou le pavillon. La première partie 10 est alors assemblée avec cet élément.

Alternativement, ces premiers moyens de fixation 12 sont des moyens d'assemblages mécaniques permanents tels que des rivetages, ou des moyens d'assemblage mécanique amovibles tels que des ensembles vis-écrou. La première partie 10 peut également être fixée sur la doublure de hayon 90 en un ou plusieurs points par l'un de ces moyens, en un ou plusieurs d'autres points par un autre de ces moyens.

Les premiers moyens de fixation 12 peuvent être amovibles ou inamovibles. Dans le cas où ils sont amovibles, la première partie 10 du becquet 1 présente l'avantage d'être aisément remplaçable sur un véhicule donné.

Le becquet 1 illustré sur la figure 1 comprend également une deuxième partie 20, qui est fixée de façon amovible sur la première partie 10 dans une position de fixation à l'aide de deuxièmes moyens de fixation 22. Ces moyens de fixation 22 sont des ensembles vis-écrou (boulon) répartis selon la direction transversale du véhicule. La deuxième partie 20 peut en outre être fixée de façon amovible par des troisièmes moyens de fixation 93 sur la doublure de hayon 90, comme représenté sur la figure 1. Dans le cas représenté sur la figure 1, ces troisièmes moyens de fixation 93 sont des ensembles vis-écrou répartis selon la direction transversale du véhicule.

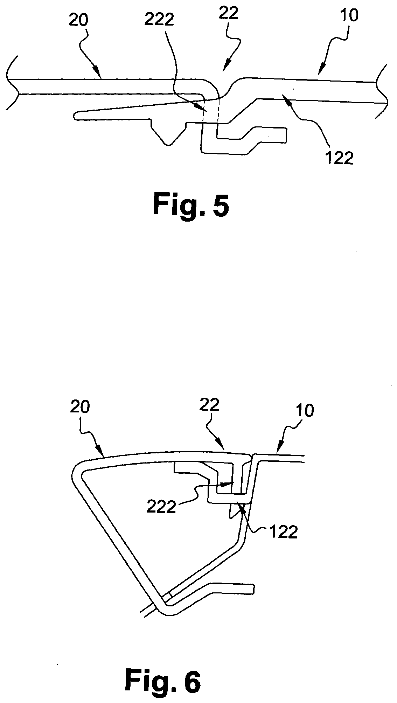

D'autres types de deuxièmes moyens de fixation 22 amovibles sont illustrés sur les figures 5 et 6, et sont décrits ci-dessous.

Une fois fixé sur le véhicule, le becquet 1 s'étend donc vers l'arrière depuis l'arrière du véhicule comme un aileron, la première partie 10 constituant la portion avant (vers l'avant du véhicule) de cet aileron, et la deuxième partie 20 constituant la portion arrière (vers l'arrière du véhicule) de cet aileron. L'extrémité arrière de cette deuxième partie 20 forme le bord de fuite du becquet 1. Ainsi, sur la figure 1, l'avant du véhicule se situe vers la droite, l'arrière du véhicule se situe vers la gauche.

Selon l'invention, dans la position de fixation de la deuxième partie 20 sur la première partie 10, une portion 14 de la face supérieure de la première partie 10 reste visible.

Par le fait qu'une portion 14 de la face supérieure de la première partie 10 reste visible, on entend que cette portion est visible au moins en vue de dessus du véhicule. Elle est préférentiellement également visible pour un utilisateur adulte se tenant en station debout en arrière du véhicule et à proximité de ce véhicule.

Avantageusement, l'une au moins de la première partie 10 et de la deuxième partie 20 est structurelle.

Par pièce structurelle d'un ensemble constitué de plusieurs pièces, on entend une pièce dont la fonction principale est de contribuer à la rigidification d'une autre pièce de cet ensemble. Ainsi, une peau, qui désigne une pièce dont la rigidité est moindre que la rigidité de la pièce (par exemple un support ou un longeron, ou encore une doublure de hayon, ou un pavillon du véhicule) sur laquelle elle est fixée, ou une pièce d'habillage, de finition, d'aspect cosmétique, n'est pas une pièce structurelle.

Avantageusement, le becquet 1 porte un élément technique.

Lorsqu'à la fois la première partie 10 et la deuxième partie 20 sont structurelles, le becquet 1 est davantage apte à porter un élément technique quelle que soit l'emplacement de cet élément sur le becquet 1.

On entend par élément technique un élément apportant une fonctionnalité au véhicule autre que celle du becquet. Cet élément technique est par exemple tout ou partie d'un feu de signalisation arrière, d'un élément décoratif (jonc chromé, emblème ...) ou lumineux (liseré rétro éclairé ...), d'une antenne, d'un lave-vitre (élément composé du gicleur et du tuyau), d'un essuie-vitre, d'une caméra, d'un capteur, d'un radar. Le cas échéant, cet élément technique est connecté à une alimentation électrique ou en eau du véhicule.

L'élément technique peut être positionné sur la première partie 10 (sauf s'il s'agit d'un feu de signalisation) ou sur la deuxième partie 20 du becquet 1.

Avantageusement, l'élément technique est positionné sur la deuxième partie 20.

L'élément technique est ainsi mieux visible d'un autre véhicule suivant le véhicule, ce qui est spécialement avantageux s'il s'agit d'un feu de signalisation ou d'un élément décoratif / lumineux.

Comme représenté sur la figure 1, qui illustre un mode de réalisation avantageux de l'invention, la première partie 10 est conformée pour permettre le montage et le démontage d'une lunette 98 sur la doublure de hayon 90 lorsque la première partie 10 est en position de fixation.

La première partie 10, qui est en position de fixation sur le véhicule, ne gêne alors pas la fixation de la lunette 98 sur la doublure de hayon 90. Une fois la lunette 98 fixée, on peut fixer la deuxième partie 20 sur la première partie 10. La deuxième partie 20 étant amovible, on peut toujours retirer la lunette 98 après avoir retiré la deuxième partie 20, et la remplacer par une autre lunette si cela est nécessaire sans avoir besoin de toucher à la première partie 10, qui n'est pas nécessairement amovible. Après le remplacement de la lunette 98, il suffit de fixer à nouveau la deuxième partie 20 sur la première partie 10.

Avantageusement, la deuxième partie 20 recouvre le bord supérieur de la lunette 98 lorsque cette deuxième partie 20 est en position de fixation

La partie inférieure de la deuxième partie 20 est appelée plage inférieure 24. Elle masque la zone supérieure collée de la lunette 98.

Ainsi, le bord supérieur de la lunette 98 (et en particulier le cordon de collage ou joint d'étanchéité avec la doublure de hayon 90) n'est pas visible pour une personne se tenant à l'arrière et à l'extérieur du véhicule et regardant la lunette et le becquet.

Selon un mode de réalisation de l'invention, la première partie 10 est fixée sur la doublure de hayon 90 du véhicule, comme représenté sur la figure 1.

Dans ce cas, la première partie 10 du becquet 1 est montée sur la partie supérieure de la doublure de hayon 90, c'est-à-dire sur le montant supérieur du cadre formant l'ouverture destinée à recevoir la lunette 98.

Le becquet 1 contribue alors au renforcement structurel de ce cadre de lunette 98.

Selon un autre mode de réalisation que celui illustré sur la figure 1, la première partie 10 est fixée sur le pavillon du véhicule. Le pavillon désigne le toit du véhicule. Ceci peut notamment être le cas lorsque le véhicule ne comporte pas de hayon.

La deuxième partie 20 présente un espace intérieur 30. Cet espace intérieur 30 est délimité par le panneau 25 de la deuxième partie 20. Le terme « panneau » désigne la partie principale de la deuxième partie 20 formant une paroi visible, donnant la forme générale extérieure (volume, dimensions ...) de la deuxième partie 20. Ce panneau 25 présente avantageusement une finition d'aspect telle qu'une peinture, une teinte obtenue par la matière plastique colorée dans la masse, un chromage), un état de surface (lisse, grainé). Ainsi, la plage supérieure 23 du panneau 25 se prolonge vers l'arrière puis se recourbe pour former le bord de fuite de cette deuxième partie 20. Ce bord de fuite se prolonge ensuite pour former la plage inférieure 24 du panneau 25. Le panneau 25 forme donc un caisson qui délimite l'espace intérieur 30. Une portion de la première partie 10, et éventuellement une partie de la doublure du hayon 90 peuvent border l'espace intérieur 30.

On a représenté en figure 2 le cas où la deuxième partie 20 du becquet est en version courte, c'est-à-dire que cette deuxième partie 20 ne s'étend pas ou peu en arrière de la verticale du lieu de contact le plus en arrière de cette deuxième partie 20 avec la lunette 98 ou avec le véhicule.

Avantageusement, en version longue la deuxième partie 20 comprend un panneau 25 et un renfort 28 qui s'étend dans l'espace intérieur 30 de la deuxième partie 20, et qui renforce le panneau 25.

Le mode de réalisation de l'invention où la deuxième partie comprend un renfort 28 est illustré en figure 1, dans le cas où la deuxième partie 20 du becquet est en version longue, c'est-à-dire que cette deuxième partie 20 s'étend sensiblement en arrière de la verticale du lieu de contact le plus en arrière de cette deuxième partie 20 avec la lunette 98 ou avec le véhicule. Le renfort 28 constitue ainsi une armature intérieure qui contribue à renforcer et à rigidifier la deuxième partie 20 en lui apportant un soutien au niveau de sa plage supérieure 23, en cas d'enfoncement de la plage supérieure 23. En effet, dans sa version longue, cette plage supérieure 23 n'est pas assez rigide naturellement et pourrait être enfoncée et demeurer déformée sous l'effet de contraintes extérieures mécaniques (par exemple un impact), ou thermique (par exemple l'ensoleillement) ce qui conduirait à une dégradation de la qualité perçue ou à une étanchéité défaillante.

Par exemple, le renfort 28 est un bras dont l'extrémité libre 285 est à proximité immédiate de la plage supérieure 23 du panneau 25 de la deuxième partie 20.

Par proximité immédiate, on signifie que la distance entre l'extrémité 285 du bras 28 et la face interne de la plage supérieure 23 est inférieure à la distance maximale de déformation élastique de cette paroi supérieure 23 au droit de cette extrémité 285. En d'autres termes, la plage supérieure 23 entrera en contact avec l'extrémité 285 avant de se déformer de façon irréversible. Ainsi, le bras 28 contribue à empêcher la plage supérieure 23 de se déformer au-delà de son domaine de déformations réversibles.

Une autre raison, à la présence du renfort 28 à proximité immédiate de la plage supérieure 23, est relative à une notion subjective correspondant, en qualité perçue, à la sensation que la pièce est souple, c'est-à-dire que la pièce s'enfonce sous la pression d'un doigt. Une telle sensation est souvent perçue comme un manque de solidité de la pièce, et est donc évitée par les fabricants automobiles.

La distance entre deux objets est définie au sens mathématique, c'est-à-dire la longueur minimale entre un point du premier de ces objets et un point du second de ces objets.

Comme illustré sur la figure 1, le renfort 28 s'étend, dans un plan longitudinal (plan de coupe de la figure 1), depuis la plage inférieure 24 du panneau 25 jusqu'à proximité immédiate de la plage supérieure 23. Le renfort 28 s'étend ainsi de la plage inférieure 24 du panneau 25 vers sa plage supérieure 23, sans toutefois être en contact avec cette dernière.

En effet, l'extrémité 285 n'est avantageusement pas en contact avec la plage supérieure 23.

Ainsi, le bras 28 ne déforme pas la plage supérieure 23, et ne modifie donc pas l'aspect de la plage supérieure 23 ni n"introduit de contraintes dans cette plage supérieure 23 (défauts de retassure visibles sur la face externe).

Par exemple, la distance entre l'extrémité 285 du bras 28 et la face interne de la plage supérieure 23 est non-nulle et de l'ordre de 1mm, de préférence inférieure à 0.5mm.

Avantageusement, comme représenté en figure 1, l'extrémité 285 du bras 28 est plane et parallèle à la plage supérieure 23 sur une certaine distance de l'avant vers l'arrière du panneau 25. Ainsi, le support de cette plage supérieure 23, en cas de sa déformation, est meilleur.

Le renfort 28 s'étend par ailleurs selon la direction transversale du véhicule, entre l'extrémité gauche et l'extrémité droite de la doublure de hayon 90 (ou de façon équivalente, du pavillon). Le renfort 28 forme par exemple une plaque continue (le bras est alors une plaque s'étendant dans la direction transversale).

Avantageusement, le renfort 28 est constitué de plusieurs renforts élémentaires 283 espacés répartis entre l'extrémité gauche à l'extrémité droite de la doublure de hayon 90 (le bras 28 est alors constitué par cet ensemble de renforts élémentaires 283).

Cette variante permet ou facilite le démoulage du renfort 28.

Avantageusement, comme illustré sur la figure 1, le renfort 28 et le panneau 25 constituent ensemble une pièce d'un seul tenant, le renfort 28 étant articulé avec le panneau 25 par une portion rétrécie 29 du panneau 25, et étant repliable dans l'espace intérieur 30 dans une position repliée où il renforce le panneau 25.

La fabrication du panneau 25 et du renfort 28 est ainsi facilitée. La portion rétrécie 29 forme une charnière et permet une articulation du renfort 28 entre une position dépliée correspondant à sa position de moulage, et une position repliée correspondant à sa position assemblée dans le becquet où il renforce le panneau 25.

Par exemple, la portion rétrécie 29 est un film charnière venu de moulage.

Lorsque le renfort 28 est en forme de plaque, la portion rétrécie 29 s'étend sensiblement sur toute la largeur du véhicule (dans sa direction transversale).

Lorsque le renfort 28 est constitué d'une pluralité de renforts élémentaires 283 espacés, la portion rétrécie 29 est constituée d'une multiplicité de charnières élémentaires 293, éventuellement disjointes, chacune de ces charnières élémentaires 293 rattachant un de ces renforts élémentaires 283 à la plage inférieure 24 du panneau 25.

La portion rétrécie 29 se situe sur une partie intermédiaire de la plage inférieure 24 du panneau 25, c'est-à-dire entre ses deux extrémités. Ainsi, comme représenté sur la figure 1, cette plage inférieure 24 se prolonge au-delà de cette portion rétrécie 29 par une paroi d'assemblage 26. Cette paroi d'assemblage 26 est utilisée pour se fixer de façon amovible sur la doublure de hayon 90 à des points d'attache 93. En variante, la paroi d'assemblage 26 peut être utilisée pour se fixer sur la première partie 10 du becquet 1.

Alternativement, la portion rétrécie 29 se situe à l'extrémité arrière de la plage inférieure 24 du panneau 25, et dans ce cas le renfort 28 prolonge seul cette plage inférieure 24.

On note que dans le cas de la version courte de la deuxième partie 20 du becquet 1, illustrée en figure 2, il n'y a pas de renfort supplémentaire 28, puisque ce dernier est inutile : en effet la plage supérieure 23 est plus courte donc moins sujette à déformation et la paroi 24 contribuant directement à ce rôle de renfort. La paroi d'assemblage 26 prolonge seule la plage inférieure 24. Eventuellement, une portion rétrécie 29 formant articulation se situe à l'interface entre la plage inférieure 24 et la paroi d'assemblage 26.

Sur la figure 1, le renfort 28 est en position repliée d'assemblage.

Une butée 35 permet de positionner et fixer le renfort 28 en position repliée.

Par exemple, la butée 35 qui cale et immobilise le renfort 28 en position repliée est située sur la face interne de la paroi supérieure 23.

Avantageusement, la butée 35 est située à proximité immédiate de la portion rétrécie 29, soit sur la face interne de la paroi inférieure 24 du panneau 25, soit sur le renfort 28. La butée 35 est conformée pour positionner et fixer le renfort 28 dans sa position finale repliée où il s'étend entre la plage inférieure 24 et la plage supérieure 23.

Avantageusement, la butée 35 est positionnée sur le renfort 28.

Cette position de la butée 35 permet une fabrication par injection plus aisée et plus fiable de l'ensemble du panneau 25, du renfort 28, et de la butée 35. De plus, en évitant de positionner la butée 35 sur la face intérieure de la plage supérieure 23, on évite des défauts de retassure visibles sur la face externe de 25.

Par exemple la butée 35 est constituée d'une pluralité de nervures 358 espacées les unes des autres, qui s'étendent chacune dans un plan perpendiculaire à la direction transversale du véhicule. Chaque plaque 358 présente un bord 3584 qui vient en appui contre la face interne de la plage inférieure 24 du panneau 25 lorsque le renfort 28 est en position finale repliée.

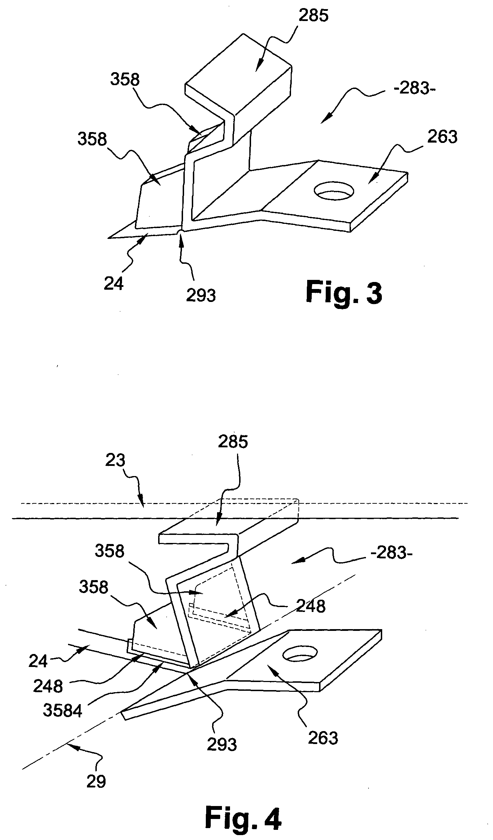

Cette situation est représentée sur la figure 3, sur laquelle est illustrée en perspective une partie de la figure 1, à savoir un des renforts élémentaires 283, des plaques 358 de la butée 35, une paroi d'assemblage 26 et une charnière élémentaire 293. Chaque renfort élémentaire 283 porte au moins une plaque 358 (deux selon l'exemple de la figure 3). Au niveau de chaque charnière élémentaire 293, la plage inférieure 24 se prolonge par une paroi élémentaire d'assemblage 263, la paroi d'assemblage 26 étant constituée d'une pluralité de ces parois élémentaires d'assemblage 263. Chaque paroi élémentaire d'assemblage 263 correspond à un renfort élémentaire 283, attachés à une même charnière élémentaire 293, et forment un ensemble élémentaire rigide.

Avantageusement, chaque plaque 358 se loge et se coince dans un évidemment 248 non-traversant (lamage) ménagé dans en réduction locale d'épaisseur de la plage inférieure 24 lorsque le renfort élémentaire 283 est en position repliée. Le coincement est obtenu par exemple à l'aide de godrons (bourrelets) situés sur chaque face latérale interne d'une fente 248, et qui pincent par déformation élastique la plaque 358 insérée dans la 248.

Ainsi, chaque renfort élémentaire 283 est correctement positionné et maintenu, de façon réversible, en position repliée.

La figure 4 illustre une variante de réalisation du renfort 28. Par rapport à la situation de la figure 3, les renforts élémentaires 283 et les parois élémentaires d'assemblage 263 sont situés en positions alternées le long de la charnière 29.

Ainsi, une charnière élémentaire 293 porte un renfort élémentaire 283, la charnière élémentaire 293 adjacente porte une paroi élémentaire d'assemblage 263, la charnière élémentaire 293 adjacente porte un renfort élémentaire 283, et ainsi de suite tout le long de la charnière 29.

Par exemple, comme représenté sur la figure 4, il n'existe sensiblement pas d'espacement transversal au niveau de la charnière 29 entre une paroi élémentaire d'assemblage 263, et le renfort élémentaire 283 qui lui est adjacent.

Cette variante permet une fabrication par injection plus aisée et plus fiable de la deuxième partie 20. En effet, suivant les formes de la deuxième partie 20 les contraintes de démoulage peuvent empêcher de réaliser le renfort 28 et la paroi d'assemblage 26 selon le mode de la figure 3.

Les figures 5 et 6 illustrent d'autres modes de fixation de la deuxième partie 20 sur la première partie 10.

Avantageusement, la fixation de la deuxième partie 20 sur la première partie 10 s'effectue par encliquetage.

Selon une première variante, la première partie 10 présente des pattes 122 qui viennent s'encliqueter dans des trous 222 situés sur la deuxième partie 20. Cet encliquetage s'effectue selon une direction horizontale. Cette variante est représentée sur la figure 5.

Selon une autre variante, la première partie 10 présente des trous 122 dans lesquels viennent s'encliqueter dans pattes 222 situées sur la deuxième partie 20. Cet encliquetage s'effectue selon une direction verticale. Cette variante est représentée sur la figure 6.

Dans ces deux variantes, les trous et les pattes, qui constituent les deuxièmes moyens de fixation 22, sont espacés sensiblement régulièrement dans la direction transversale, entre l'extrémité gauche et l'extrémité droite du hayon 90.

Alternativement, les deuxièmes moyens de fixation 22 de la deuxième partie 20 et de la première partie 10 sont constitués en partie d'ensembles vis-écrou, en partie d'encliquetages.

## Revendications

1. Becquet (1) arrière de véhicule automobile, ledit becquet (1) étant **caractérisé en ce qu'**il comporte :
- Une première partie (10) qui est destinée à être fixée sur l'arrière dudit véhicule dans une position de fixation à l'aide de premiers moyens de fixation (12),
- Une deuxième partie (20) qui est destinée à être fixée de façon amovible sur ladite première partie (10) dans une position de fixation par des deuxièmes moyens de fixation (22), ladite deuxième partie (20) laissant visible une portion (14) de la face supérieure de ladite première partie (10) dans ladite position de fixation.

2. Becquet (1) selon la revendication 1, **caractérisé en ce que** l'une au moins de ladite première partie (10) et de ladite deuxième partie (20) est structurelle.

3. Becquet (1) selon la revendication 1 ou 2, **caractérisé en ce que** ladite deuxième partie (20) est structurelle et **en ce que** ladite deuxième partie (20) porte un élément technique.

4. Becquet (1) selon l'une quelconque des revendications 1 à 3, **caractérisé en ce que** ladite première partie (10) est conformée pour permettre le montage et le démontage d'une lunette (98) lorsque ladite première partie (10) est en position de fixation.

5. Becquet (1) selon l'une quelconque des revendications 1 à 4, **caractérisé en ce que** ladite deuxième partie (20) recouvre le bord supérieur de ladite lunette (98) lorsque cette deuxième partie (20) est en position de fixation.

6. Becquet (1) selon l'une quelconque des revendications 1 à 5, **caractérisé en ce que** ladite deuxième partie (20) comprend un panneau (25), et un renfort (28) qui s'étend dans l'espace intérieur (30) de la deuxième partie (20), et qui renforce ledit panneau (25).

7. Becquet (1) selon la revendication 6, **caractérisé en ce que** ledit renfort (28) est un bras dont une extrémité 285 est à proximité immédiate de la plage supérieure (23) du panneau (25) de la deuxième partie (20).

8. Becquet (1) selon la revendication 6 ou 7, **caractérisé en ce que** ledit renfort (28) et ledit panneau (25) constituent une pièce d'un seul tenant, ledit renfort (28) étant articulé avec ledit panneau (25) par une portion rétrécie (29) dudit panneau (25), et étant repliable dans ledit espace intérieur (30) dans une position repliée où il renforce ledit panneau (25).

9. Becquet (1) selon la revendication 8, **caractérisé en ce que** ladite portion rétrécie (29) est un film charnière venu de moulage.

10. Becquet (1) selon l'une quelconque des revendications 1 à 9, **caractérisé en ce que** la fixation de ladite deuxième partie (20) sur ladite première partie (10) s'effectue par encliquetage.

11. Becquet (1) selon l'une quelconque des revendications 1 à 10, **caractérisé en ce que** ladite première partie (10) est fixée sur la doublure d'un hayon (90) dudit véhicule.

12. Becquet (1) selon l'une quelconque des revendications 1 à 10, **caractérisé en ce que** ladite première partie (10) est fixée sur le pavillon dudit véhicule.

## Patentansprüche

1. Heck-Spoiler (1) für Kraftfahrzeug, wobei der Spoiler (1) **dadurch gekennzeichnet ist, dass** er Folgendes aufweist:
- einen ersten Teil (10), der dazu bestimmt ist, an dem Heck des Fahrzeugs in einer Befestigungsposition mit Hilfe von ersten Befestigungseinrichtungen (12) befestigt zu werden,
- einen zweiten Teil (20), der dazu bestimmt ist, auf lösbare Weise an dem ersten Teil (10) in einer Befestigungsposition durch zweite Befestigungseinrichtungen (22) befestigt zu werden, wobei der zweite Teil (20) einen Abschnitt (14) der oberen Fläche des ersten Teils (10) in der Befestigungsposition sichtbar belässt.

2. Heckspoiler (1) nach Anspruch 1, **dadurch gekennzeichnet, dass** mindestens einer von dem ersten Teil (10) und dem zweiten Teil (20) strukturell ist.

3. Heckspoiler (1) nach Anspruch 1 oder 2, **dadurch gekennzeichnet, dass** der zweite Teil (20) strukturell ist und dass der zweite Teil (20) ein technisches Element trägt.

4. Heckspoiler (1) nach einem der Ansprüche 1 bis 3, **dadurch gekennzeichnet, dass** der erste Teil (10) ausgebildet ist, um die Montage und die Demontage einer Lünette (98) zu gestatten, wenn der erste Teil (10) in der Befestigungsposition ist.

5. Heckspoiler (1) nach einem der Ansprüche 1 bis 4, **dadurch gekennzeichnet, dass** der zweite Teil (20) den oberen Rand der Lünette (98) bedeckt, wenn der zweite Teil (20) in der Befestigungsposition ist.

6. Heckspoiler (1) nach einem der Ansprüche 1 bis 5, **dadurch gekennzeichnet, dass** der zweite Teil (20) ein Paneel (25) und eine Verstärkung (28) umfasst, die sich in den Innenraum (30) des zweiten Teils (20) erstreckt und die das Paneel (25) verstärkt.

7. Heckspoiler (1) nach Anspruch 6, **dadurch gekennzeichnet, dass** die Verstärkung (28) ein Arm ist, von dem ein Ende (285) in unmittelbarer Nähe des oberen Bereichs (23) des Paneels (24) des zweiten Teil (20) ist.

8. Heckspoiler (1) nach Anspruch 6 oder 7, **dadurch gekennzeichnet, dass** die Verstärkung (28) und das Paneel (25) ein einstückiges Teil bilden, wobei die Verstärkung (28) mit dem Paneel (25) durch einen verengten Abschnitt (29) des Paneels (25) angelenkt ist und in dem Innenraum (30) in eine umgeklappte Position umklappbar ist, wo sie das Paneel (25) verstärkt.

9. Heckspoiler (1) nach Anspruch 8, **dadurch gekennzeichnet, dass** der verengte Abschnitt (29) eine angeformte Folie ist.

10. Heckspoiler (1) nach einem der Ansprüche 1 bis 9, **dadurch gekennzeichnet, dass** die Befestigung des zweiten Teils (20) an dem ersten Teil (10) durch Einrasten erfolgt.

11. Heckspoiler (1) nach einem der Ansprüche 1 bis 10, **dadurch gekennzeichnet, dass** der erste Teil (10) an der Auskleidung einer Heckklappe (90) des Fahrzeugs befestigt ist.

12. Heckspoiler (1) nach einem der Ansprüche 1 bis 10, **dadurch gekennzeichnet, dass** der erste Teil (10) an dem Karosserieoberteil des Fahrzeugs befestigt ist.

## Claims

1. Rear spoiler (1) of a motor vehicle, said spoiler (1) being **characterised in that** it comprises:
- A first part (10) which is intended for being attached to the rear of said vehicle in an attachment position by means of first attachment means (12),
- A second part (20) which is intended for being removably attached to said first part (10) in an attachment position by second attachment means (22), said second part (20) leaving a portion (14) of the upper surface of said first part (10) visible in said attachment position.

2. Spoiler (1) according to claim 1, **characterised in that** the at least one of said first part (10) and of said second part (20) is structural.

3. Spoiler (1) according to claim 1 or 2, **characterised in that** said second part (20) is structural and **in that** said second part (20) carries a technical element.

4. Spoiler (1) according to any one of claims 1 to 3, **characterised in that** said first part (10) is shaped to allow the assembly and removal of a rear window (98) when said first part (10) is in the attachment position.

5. Spoiler (1) according to any one of claims 1 to 4, **characterised in that** said second part (20) covers the upper edge of said rear window (98) when this second part (20) is in the attachment position.

6. Spoiler (1) according to any one of claims 1 to 5, **characterised in that** said second part (20) comprises a panel (25) and a reinforcement (28) which extends into the interior space (30) of the second part (20), and which reinforces said panel (25).

7. Spoiler (1) according to claim 6, **characterised in that** said reinforcement (28) is an arm which has one end 285 in the immediate proximity of the upper surface (23) of the panel (25) of the second part (20).

8. Spoiler (1) according to claim 6 or 7, **characterised in that** said reinforcement (28) and said panel (25) constitute together a single part made in one piece, said reinforcement (28) being hinged to said panel (25) by a narrowed portion (29) of said panel (25) and being foldable in said inner space (30) in a folded position in which it reinforces said panel (25).

9. Spoiler (1) according to claim 8, **characterised in that** said narrowed portion (29) is a moulded hinge film.

10. Spoiler (1) according to any one of claims 1 to 9, **characterised in that** said second part (20) is attached to said first part (10) by snap-fastening.

11. Spoiler (1) according to any one of claims 1 to 10, **characterised in that** said first part (10) is attached to the lining of a tailgate (90) of said vehicle.

12. Spoiler (1) according to any one of claims 1 to 10, **characterised in that** said first part (10) is attached to the roof of said vehicle.
